# EUROPÄISCHE PATENTANMELDUNG

(11) **EP 2 716 824 A2**
(43) Veröffentlichungstag der Anmeldung: **09.04.2014**
(21) Anmeldenummer: 13183680.1
(22) Anmeldetag: 10.09.2013
(51) Int. Cl.: E03C 1/02, F16L 11/16, F16L 11/20

(54) **Schlauch, insbesondere Brauseschlauch**

(30) Priorität: 02.10.2012 DE 102012218036
(71) Anmelder: Witzenmann GmbH, 75175 Pforzheim (DE)
(72) Erfinder: Eilber, Edgar, 75228 Ispringen (DE); Tuncsik, Christoph, 76332 Bad Herrenalb (DE)
(74) Vertreter: Lemcke, Brommer & Partner

(57) **Zusammenfassung**

Die vorliegende Erfindung betrifft einen Schlauch, insbesondere Brauseschlauch, mit einem Innenschlauch (2) aus elastomerem Material, einem den Innenschlauch (2) umgebenden, helixförmig gewickelten Metallschlauch (1) und einer den Metallschlauch (1) umgebenden Ummantelung (7) aus Kunststoff, sowie mit einer an einem Ende des Schlauchs angebrachten Anschlussvorrichtung zum Anschließen des Schlauchs mittels eines stirnseitig angeordneten Anschlussflansches (8) an eine Armatur oder dergleichen. Die Anschlussvorrichtung umfasst eine Innenhülse(6), die im Inneren des Innenschlauchs (2) sitzt, und eine Außenhülse (3), die außen auf dem Metallschlauch (1) und seiner Ummantelung (7) sitzt.

Des Weiteren weist die Anschlussvorrichtung außerdem ein Anschlussstück (5) auf, das zwischen dem Innenschlauch (2) und dem Metallschlauch (1) sitzt und sich stirnseitig in den Anschlussflansch (8) fortsetzt, wobei die Innenhülse (6), das Anschlussstück (5) und die Außenhülse (3) sich in einer radialen Projektion zumindest bereichsweise überlappen

## Beschreibung

Die Erfindung betrifft einen Schlauch, insbesondere einen Brauseschlauch, nach dem Oberbegriff des Anspruchs 1 sowie eine Anschlussvorrichtung zum Anschließen eines solchen Schlauchs an eine Armatur, einen Brausekopf oder dergleichen.

Ein Schlauch der vorliegenden Art umfasst demnach einen Innenschlauch aus elastomerem Material, in dem das Fluid, in der Regel Wasser, geführt wird. Um die mechanische Stabilität des elastomeren Innenschlauchs zu verbessern, ist dieser in einem helixförmig gewickelten Metallschlauch geführt. Dieser Metallschlauch kann, je nach Anwendungsfall, locker mit Zwischenräumen zwischen den einzelnen Windungen, oder aber relativ dicht sowie mit Wicklungen gewickelt sein, die sich ineinander verhaken. Um den Metallschlauch in der feuchten Umgebung, in der ein Schlauch der vorliegenden Art üblicherweise benutzt wird, vor Korrosion und Schmutzablagerungen zu schützen, ist dieser schließlich mit einer Kunststoff-Ummantelung versehen.

Um den Schlauch an seinen Enden anschließen zu können, im Falle eines Brauseschlauchs also einerseits an einer Armatur und andererseits an einem Brausekopf, ist ein Schlauch der vorliegenden Art an mindestens einem seiner Enden mit einer Anschlussvorrichtung versehen, die stirnseitig einen Anschlussflansch zum Anschließen des Schlauchs an eine Armatur oder dergleichen aufweist. Die Anschlussvorrichtung muss hierbei einerseits gewährleisten, dass eine mechanisch widerstandsfähige und dauerhafte Verbindung hergestellt werden kann, die insbesondere hohen Auszugskräften Stand hält. Andererseits muss die Anschlussvorrichtung langzeitstabil fluiddicht sein und hierbei den herrschenden Innendrücken und eventuellen Druckpulsen Stand halten.

Zur Erfüllung dieser Anforderungen weisen Anschlussvorrichtungen nach dem Stand der Technik eine Innenhülse und eine Außenhülse auf, wobei die Innenhülse im Inneren des Innenschlauchs sitzt und üblicherweise in diesen eingepresst ist, beispielsweise indem sie eine konische Form aufweist, und wobei die Außenhülse außen auf dem Metallschlauch und seiner Ummantelung sitzt. Die Innenhülse gewährleistet die Fluiddichtheit der Verbindung, indem sie sich bei bekannten Lösungen stirnseitig in den Anschlussflansch fortsetzt. Der Anschlussflansch dichtet dann mit seiner stirnseitigen Dichtfläche das Innere der Innenhülse gegen die Armatur ab. Die Außenhülse sorgt für eine mechanische Stabilisierung der Anschlussvorrichtung, da sie den Bereich der Anschlussvorrichtung gegen ein Abknicken des Schlauchs schützt. Ein Beispiel für einen Schlauch und eine Anschlussvorrichtung dieser bekannten Art findet sich in der EP 1 956 149 A1.

Dadurch, dass im Stand der Technik der Anschlussflansch der Anschlussvorrichtung Teil der Innenhülse ist, und diese Innenhülse im Innenschlauch aus elastomerem Material sitzt, werden Auszugskräfte, die auf die Anschlussvorrichtung wirken, in den Innenschlauch eingeleitet. Dies ist allerdings nicht optimal, denn der Innenschlauch ist für hohe mechanische Belastungen nicht ausgelegt.

Der vorliegenden Erfindung liegt daher die Aufgabe zugrunde, einen Schlauch und eine Anschlussvorrichtung der eingangs genannten Art solcherart weiterzubilden, dass eine verbesserte Auszugssicherung gegeben ist.

Gelöst ist diese Aufgabe durch einen Schlauch mit den Merkmalen des Anspruchs 1 sowie durch eine Anschlussvorrichtung mit den Merkmalen des Anspruchs 11. Bevorzugte Ausgestaltungen und Weiterbildungen des erfindungsgemäßen Schlauchs finden sich in den Ansprüchen 2 bis 10.

Gemäß der vorliegenden Erfindung werden die Innenhülse und der stirnseitige Anschlussflansch nicht mehr als ein einziges integriertes Bauteil ausgebildet, sondern der Anschlussflansch ist Teil eines separaten Anschlussstücks, das zwischen dem Innenschlauch und dem Metallschlauch sitzt und die mechanischen Kräfte vom Anschlussflansch vorzugsweise direkt, und jedenfalls zu einem signifikanten Teil in den Metallschlauch einleitet.

Da erfindungsgemäß ferner vorgesehen ist, dass sich die Innenhülse, das Anschlussstück und die Außenhülse in einer radialen Projektion zumindest bereichsweise überlappen, stabilisieren sich diese Bauteile gegenseitig. Es ist so auch beispielsweise möglich, dass die Innenhülse - insbesondere dann, wenn sie konisch oder mit mehreren konischen Flächen ausgebildet ist - den Innenschlauch radial nach außen gegen das Anschlussstück und dieses gegen den Metallschlauch drückt, wobei die Außenhülse als gegebenenfalls notwendiges Gegenlager gegen ein Aufweiten des Metallschlauchs fungieren kann. Dies unterstützt sowohl die mechanische Festigkeit als auch die Fluiddichtheit der Verbindung.

Erfindungsgemäß ist erkannt worden, dass die Fluiddichtheit der Verbindung nicht in jedem Fall eine einstückige, ununterbrochene Verbindung zwischen dem Anschlussflansch und der Innenhülse voraussetzt. Denn gemäß der vorliegenden Erfindung sitzt das Ende des Innenschlauchs zwischen der Innenhülse und dem Anschlussstück, vorzugsweise mit einer radialen Klemmkraft, so dass der Zwischenraum zwischen der Innenhülse und dem Anschlussstück fluiddicht abgedichtet ist. Da das Anschlussstück sich erfindungsgemäß stirnseitig in den Anschlussflansch fortsetzt, ist im Ergebnis ein fluiddichter Übergang zwischen der Dichtfläche des Anschlussflansches und dem Inneren der Innenhülse sichergestellt, und zwar auch dann, wenn die Innenhülse, wie es im Rahmen der vorliegenden Erfindung bevorzugt der Fall ist, nicht fest mit dem Anschlussstück oder dem Anschlussflansch verbunden ist.

Wie an sich bereits bekannt, ist es auch im Rahmen der vorliegenden Erfindung bevorzugt, wenn die Innenhülse in den Innenschlauch eingepresst ist. Sie drückt diesen dann im Wesentlichen radial gegen das Anschlussstück, wodurch die erwähnte Dichtwirkung auch langfristig und unter hoher mechanischer Beanspruchung sowie auch bei möglichen hohen Innendrücken oder Druckpulsen gewährleistet ist.

Zur Optimierung der Fluiddichtheit und der mechanischen Widerstandsfähigkeit der Anschlussvorrichtung kann im Rahmen der vorliegenden Erfindung vorgesehen sein, dass sich die Innenhülse stirnseitig in einen radial nach außen orientierten Kragen fortsetzt, der in axialer Projektion einen Teil des Anschlussstücks stirnseitig überdeckt sowie vorzugsweise mit dem Anschlussflansch des Anschlussstücks stirnseitig eine gemeinsame radiale Ebene bildet. Mit einer solchen Ausbildung der Innenhülse kann diese einen gewissen Teil der mechanischen Auszugssicherung übernehmen, und bei einem etwaigen Abknicken oder Verbiegen des Schlauchs und der Anschlussvorrichtung gegenüber dem Anschlussflansch wird ein nachteiliges Verkanten der Innenhülse gegenüber dem Anschlussstück verhindert. Insbesondere, wenn der Kragen der Innenhülse und der Anschlussflansch stirnseitig eine gemeinsame radiale Ebene bilden und hierdurch definiert an der Armatur oder dergleichen festgelegt werden, ergibt sich ein definiertes Fixieren der Innenhülse, des Anschlussstücks sowie des Innenschlauchs und des Metallschlauchs und somit eine hervorragende Langzeitstabilität der Verbindung.

Zur Erhöhung der mechanischen Stabilität der Anschlussvorrichtung kann das Anschlussstück mit Gewindestegen versehen sein, mit denen das Anschlussstück in die Wicklungen des Metallschlauchs eingeschraubt werden kann. Die außen auf dem Umfang des Anschlussstücks angeordneten Gewindestege greifen hierbei von Innen in die schraubengangförmig verlaufenden Zwischenräume der einzelnen Wicklungen des Metallschlauchs ein. Dies führt insbesondere dann zu einer hohen mechanischen Stabilität und insbesondere zur erwünschten direkten Krafteinleitung vom Anschlussflansch des Anschlussstücks in den Metallschlauch, wenn der Metallschlauch solcherart gewickelt ist, dass seine einzelnen Windungen sich ineinander verhaken.

In entsprechender Weise kann es vorteilhaft sein, wenn auch die Außenhülse der Anschlussvorrichtung Gewindestege aufweist, mit denen sie auf die Wicklungen des Metallschlauchs aufgeschraubt werden kann. In diesem Fall weist die Außenhülse in ihrem Inneren Gewindestege auf, die von außen in die Zwischenräume der einzelnen Wicklungen des Metallschlauchs eingreifen.

Nach einer besonders bevorzugten Weiterbildung der vorliegenden Erfindung bilden das Anschlussstück und die Außenhülse der Anschlussvorrichtung zwischen sich einen Ringraum zur Aufnahme des Metallschlauchs samt Ummantelung. Dieser Ringraum ist stirnseitig geschlossen, um einen axialen Anschlag für die Stirnseite des Metallschlauchs zu bilden. Wenn die Außenhülse mittels einer axial nach innen reichenden Verdickung oder dergleichen am stirnseitigen Verschluss des Ringraums beteiligt ist, ergibt sich hierdurch eine definierte Festlegung von deren Position zwischen der Stirnseite des Metallschlauchs und dem Anschlussflansch des Anschlussstücks.

Besonders vorteilhaft ist die Ausbildung des Ringraums allerdings insbesondere deswegen, weil so ein Eindringen von Feuchtigkeit an der Stirnseite des Metallschlauchs zwischen diesen und seine Ummantelung verhindert wird. Im bevorzugten Einsatzgebiet des erfindungsgemäßen Schlauches ist dieser regelmäßig einer nassen Umgebung ausgesetzt, so dass die Gefahr eines Eindringens von Umgebungswasser zwischen den Metallschlauch und die Ummantelung besteht. Dies muss jedoch verhindert werden, da sich hierdurch Verfärbungen des Metallschlauchs sowie gegebenenfalls Korrosion und Schimmelbildung ergeben, was mittel- bis langfristig dem Eindruck eines hochwertigen Produkts zuwiderlaufen würde.

Besonders zuverlässig wird das Eindringen von Wasser und Feuchtigkeit zwischen den Metallschlauch und seine Ummantelung verhindert, wenn der zwischen dem Anschlussstück und der Außenhülse gebildeten Ringraum eine Dichtung aufweist, die am axialen Anschlag für die Stirnseite des Metallschlauch sitzt und so in der Lage ist, die stirnseitigen Stoßkanten von Metallschlauch und Ummantelung gleichzeitig abzudecken und somit gegen eindringende Feuchtigkeit abzudichten.

Besonders bevorzugt wird die genannte Dichtung durch Einbringen eines Dichtungsklebers in den Ringraum zwischen dem Anschlussstück und der Außenhülse hergestellt. Der besondere Vorteil des Dichtungsklebers besteht darin, dass er eine stoffschlüssige Verbindung mit der Ummantelung des Metallschlauchs eingehen kann, was eine mechanisch besonders widerstandsfähige und langzeitstabile Dichtung gewährleistet.

Zwei Ausführungsbeispiele für einen erfindungsgemäß ausgestalteten Schlauch bzw. eine erfindungsgemäß ausgestaltete Anschlussvorrichtung werden im Folgenden anhand der beigefügten Zeichnungen näher beschrieben und erläutert. Es zeigen:
- Figur 1: eine schematische perspektivische Schnittdarstellung des Endes eines erfindungsgemäß ausgestalteten Schlauchs mit Anschlussvorrichtung;
- Figur 2: eine Darstellung wie Figur 1, jedoch einer abgewandelten Ausführungsform.

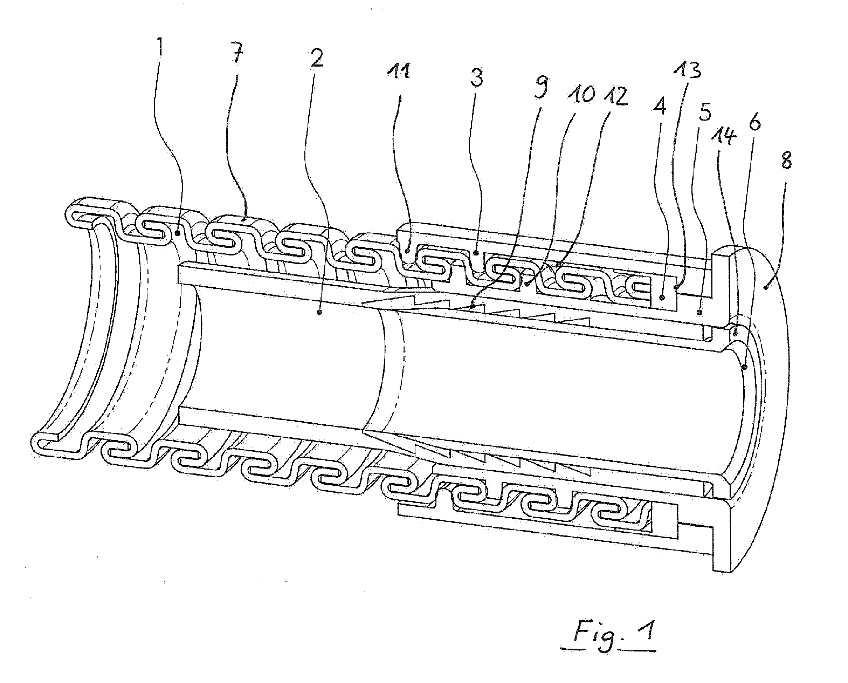

In Figur 1 ist in einer schematischen perspektivischen Schnittdarstellung ein erstes Ausführungsbeispiel für einen erfindungsgemäß ausgestalteten Schlauch bzw. eine erfindungsgemäße Anschlussvorrichtung gezeigt. Es handelt sich um einen Brauseschlauch mit einem Metallschlauch 1, einem Innenschlauch 2 aus elastomerem Material und einer Kunststoff-Ummantelung 7.

Der Metallschlauch 1 ist ein Wickelschlauch, dessen einzelne wendelförmig gewickelten Windungen aus einem gefalzten Profil bestehen. Das Falzprofil ist beim Wickeln des Schlauches ineinander verhakt worden, so dass die Windungen des Metallschlauchs 2 formschlüssig ineinandergreifen.

Die Ummantelung 7 besteht aus einem dünnen, sehr straff auf den Metallschlauch 1 aufgebrachten, elastischen Kunststoff. Aufgrund seiner nur eine dünne Schicht aufweisenden Form schränkt er die Beweglichkeit des Metallschlauchs 1 nicht ein und ist in den Figuren kaum erkennbar.

Der Innenschlauch 2 besteht aus einem kautschukartigen, elastomeren Material zur Leitung des in der Regel zwischen 30 °C und 40 °C warmen, zum Duschen vorgesehenen Wassers.

Die am Ende des dargestellten Schlauchs 1, 2, 7 angebrachte Anschlussvorrichtung besteht im vorliegenden Ausführungsbeispiel aus einer Innenhülse 6, einem Anschlussstück 5, das sich stirnseitig ein einem Anschlussflansch 8 fortsetzt, einer Außenhülse 3 und einer Dichtung 4.

Die Innenhülse 6 weist einen lichten Innenquerschnitt auf, der in etwa dem lichten Innenquerschnitt des Innenschlauchs 2 entspricht. Dementsprechend musste der Innenschlauch 2 beim Einpressen der Innenhülse 6 radial aufgeweitet werden, um wie dargestellt auf deren Außenumfang aufzuliegen. Die Innenhülse 6 ist ferner mit mehreren gestaffelten konischen Flächen 9 versehen, die axial hintereinander angeordnet und sägezahnförmig ausgebildet sind, wodurch sich, zusätzlich zur radial wirkenden elastischen Rückstellkraft des Innenschlauchs 2, eine wirkungsvolle Auszugssicherung der Innenhülse 6 aus dem Innenschlauch 2 ergibt.

Das Anschlussstück 5 ist an seinem Außenumfang mit Gewindestegen 10 versehen, die in entsprechende, innenliegende Zwischenräume zwischen den einzelnen Wicklungen des Metallschlauchs 1 eingreifen. Da der Metallschlauch 1 schraubengangförmig gewickelt ist, kann das Anschlussstück 5 mit Hilfe seiner Gewindestege 10 in den Metallschlauch 1 hineingeschraubt werden. Das Ergebnis ist in Figur 1 dargestellt: Das Anschlussstück 5 sitzt formschlüssig im Metallschlauch 1 und kann somit Auszugskräfte direkt in den Metallschlauch 1 einleiten. Stirnseitig setzt sich das Anschlussstück 5 durch eine radial nach außen gerichtete Auskragung in den Anschlussflansch 8 fort. Etwaige Kräfte, die den Schlauch von einer (nicht dargestellten) Armatur abziehen wollen, greifen am Anschlussflansch 8 an und werden also mittels der Gewindestege 10 im Wesentlichen direkt in den Metallschlauch 1 eingeleitet.

Außen auf dem Metallschlauch 1 ist schließlich die Außenhülse 3 angeordnet. Diese weist an ihrer Innenfläche Gewindestege 11 auf, die in die ebenfalls am Außenumfang des Metallschlauchs 1 vorhandenen Zwischenräume zwischen den einzelnen Wicklungen eingreifen und die Außenhülse 3 axial formschlüssig auf dem Metallschlauch 1 festlegen. Auch hier ist aufgrund der schraubengangförmigen Wicklung des Metallschlauchs 1 ein Aufschrauben der Außenhülse 3 von der Stirnseite her möglich.

Zwischen der Außenhülse 3 und dem Anschlussstück 5 wird ein Ringraum 12 gebildet, der den Metallschlauch 1 zusammen mit seiner Ummantelung 7 aufnimmt. Durch radiale Verdickungen des Anschlussstücks 5 und der Außenhülse 3 ist der Ringraum 12 stirnseitig geschlossen, indem sich dort die Außenhülse 3 und das Anschlussstück 5 radial berühren. Hierdurch wird ein Anschlag 13 für das stirnseitige Ende des Metallschlauchs 1 gebildet, wobei im vorliegenden Ausführungsbeispiel außerdem eine Dichtung 4 zwischen dem Anschlag 13 und dem stirnseitigen Ende des Metallschlauchs 1 angeordnet ist. Diese Dichtung 4 sorgt dafür, dass stirnseitig keine Feuchtigkeit zwischen den Metallschlauch 1 und seine Ummantelung 7 gelangen kann. Dies wird nicht nur durch eine mechanische Dichtungswirkung der Dichtung 4 bewirkt, sondern auch durch eine stoffschlüssige Verbindung der Dichtung 4 mit der Ummantelung 7, da die Dichtung 4 mit einem Zweikomponenten-Dichtungskleber hergestellt worden ist.

Bei der Montage der in den Zeichnungen dargestellten Anschlussvorrichtung wird wie folgt vorgegangen: Zunächst wird die Außenhülse 3 auf das dargestellte Ende des Metallschlauchs 1 und seine Ummantelung 7 aufgeschraubt und die Dichtung 4 als Dichtungskleber eingebracht. Sodann wird das Anschlussstück 5 mit seinem Anschlussflansch 8 in den Metallschlauch 1 eingeschraubt, bis der Anschlussflansch 8 an der Außenhülse 3 anschlägt. Als letztes Bauteil wird die Innenhülse 6 in den Innenschlauch 2 eingepresst, bis ein sich stirnseitig radial nach außen fortsetzender Kragen 14 der Innenhülse 6 mit dem Anschlussflansch 8 eine gemeinsame radiale Ebene bildet.

Beim Einpressen der Innenhülse 6 wird der Innenschlauch 2 radial nach außen aufgeweitet und hierbei gegen das Anschlussstück 5 gepresst. Die Außenhülse 3 fungiert hier als Gegenlager, das die Gegenkraft des Anschlussstücks 5 gegen ein radiales Aufweiten verstärkt. Im Ergebnis wird der Innenschlauch 2 mit einer hohen, dauerhaften radialen Kraft zwischen der Innenhülse 6 und dem Anschlussstück 5 gequetscht, so dass er den Ringraum zwischen der Innenhülse 6 und dem Anschlussstück 5 abdichtend ausfüllt. Das im Innenschlauch 2 transportierte Fluid kann also, trotzdem es zwischen dem Kragen 14 und dem Anschlussflansch 8 hindurch in den Ringraum zwischen der Innenhülse 6 und dem Anschlussstück 5 eindringen kann, nach außen abgedichtet. Der in diesem Ringraum gequetschte Innenschlauch 2 führt also im Ergebnis zu einer fluiddichten Verbindung des Inneren des Innenschlauchs 2 mit der stirnseitigen Dichtfläche des Anschlussflansches 8, trotzdem die Innenhülse 6 gar nicht direkt und fest mit dem Anschlussflansch 8 verbunden ist.

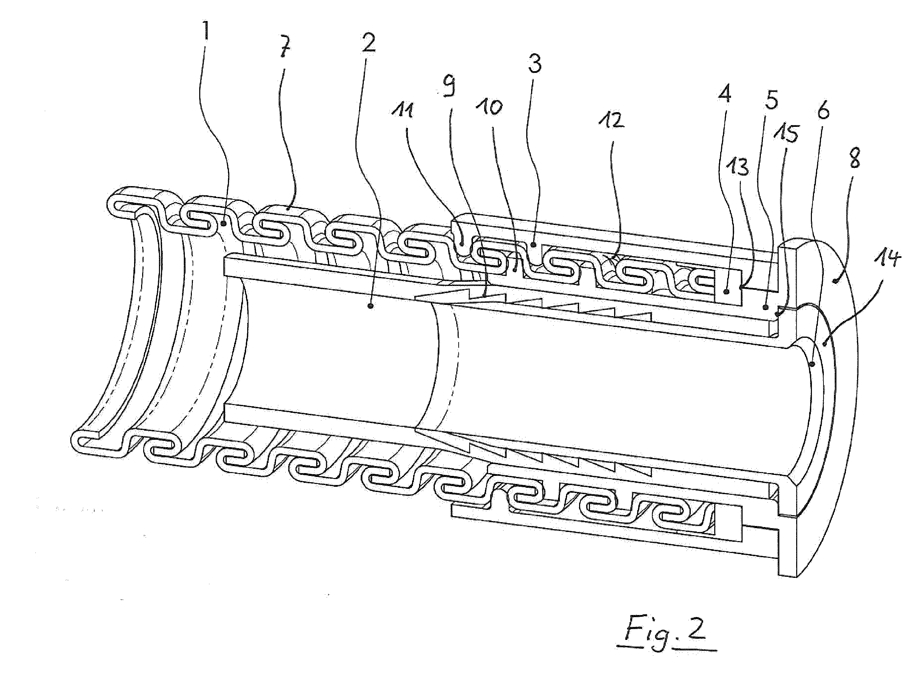

Das in Figur 2 dargestellte Ausführungsbeispiel unterscheidet sich von dem in Figur 1 gezeigten Ausführungsbeispiel lediglich durch eine breitere Ausbildung des Kragens 14 der Innenhülse 6 und einer entsprechenden Modifikation des Übergangs des Anschlussstücks 5 in den Anschlussflansch 8. Alle anderen Teile des dargestellten Schlauchs und der dargestellten Anschlussvorrichtung sind identisch ausgebildet, weswegen identische Bezugszeichen verwendet sind und auf die entsprechende Beschreibung zur Figur 1 verwiesen wird.

In dem in Figur 2 dargestellten Ausführungsbeispiel ist der radial nach außen orientierte Kragen 14 der Innenhülse 6 so verbreitert, dass er, in axialer Projektion gesehen, einen Teil des Anschlussstücks 5 stirnseitig überdeckt. Der Übergang des Anschlussstücks 5 in den Anschlussflansch 8 weist eine entsprechende Aussparung 15 auf, die eine Art Anschlag für den Kragen 14 der Innenhülse 6 bildet. Hierdurch ist zum einen gewährleistet, dass der Kragen 14 und der Anschlussflansch 8 stirnseitig eine gemeinsame radiale Ebene bilden, und zum anderen, dass die Innenhülse 6 einen Teil der Auszugssicherung übernimmt, da sie aufgrund der Aussparung 15 in der Lage ist, Auszugskräfte, die am Anschlussflansch 8 angreifen, in den Innenschlauch 2 einzuleiten.

## Patentansprüche

1. Schlauch, insbesondere Brauseschlauch, mit einem Innenschlauch (2) aus elastomerem Material, einem den Innenschlauch (2) umgebenden, helixförmig gewickelten Metallschlauch (1) und einer den Metallschlauch (1) umgebenden Ummantelung (7) aus Kunststoff, sowie mit einer an einem Ende des Schlauchs angebrachten Anschlussvorrichtung zum Anschließen des Schlauchs mittels eines stirnseitig angeordneten Anschlussflansches (8) an eine Armatur oder dergleichen, wobei die Anschlussvorrichtung eine Innenhülse (6), die im Inneren des Innenschlauchs (2) sitzt, und eine Außenhülse (3), die außen auf dem Metallschlauch (1) und seiner Ummantelung (7) sitzt, umfasst,
**dadurch gekennzeichnet,**
**dass** die Anschlussvorrichtung außerdem ein Anschlussstück (5) aufweist, das zwischen dem Innenschlauch (2) und dem Metallschlauch (1) sitzt und sich stirnseitig in den Anschlussflansch (8) fortsetzt, wobei die Innenhülse (6), das Anschlussstück (5) und die Außenhülse (3) sich in einer radialen Projektion zumindest bereichsweise überlappen.

2. Schlauch nach Anspruch 1,
**dadurch gekennzeichnet,**
**dass** die Innenhülse (6) in den Innenschlauch (2) eingepresst ist und diesen im Wesentlichen radial gegen das Anschlussstück (5) drückt.

3. Schlauch nach einem der Ansprüche 1 oder 2,
**dadurch gekennzeichnet,**
**dass** das Anschlussstück (5) und die Außenhülse (3) einen Ringraum (12) zur Aufnahme des Metallschlauchs (1) samt Ummantelung (7) zwischen sich bilden, wobei der Ringraum (12) stirnseitig geschlossen ist, um einen axialen Anschlag (13) für die Stirnseite des Metallschlauchs (1) zu bilden.

4. Schlauch nach Anspruch 3,
**dadurch gekennzeichnet,**
**dass** am axialen Anschlag (13) für die Stirnseite des Metallschlauchs (1) eine Dichtung (4) vorgesehen ist.

5. Schlauch nach Anspruch 4,
**dadurch gekennzeichnet,**
**dass** die Dichtung (4) aus einem Dichtungskleber besteht, der stoffschlüssig mit der Ummantelung (7) des Metallschlauchs (1) verbindbar ist.

6. Schlauch nach mindestens einem der Ansprüche 1 bis 5,
**dadurch gekennzeichnet,**
**dass** das Anschlussstück (5) mit Gewindestegen (10) zum Einschrauben in die Wicklungen des Metallschlauchs (1) versehen ist.

7. Schlauch nach mindestens einem der Ansprüche 1 bis 6,
**dadurch gekennzeichnet,**
**dass** die Außenhülse (3) mit Gewindestegen (11) zum Aufschrauben auf die Wicklungen des Metallschlauchs (1) versehen ist.

8. Schlauch nach mindestens einem der Ansprüche 1 bis 7,
**dadurch gekennzeichnet,**
**dass** die Innenhülse (6) nicht fest mit dem Anschlussstück (5) oder dem Anschlussflansch (8) verbunden ist.

9. Schlauch nach mindestens einem der Ansprüche 1 bis 8,
**dadurch gekennzeichnet,**
**dass** die Innenhülse (6) sich stirnseitig in einen radial nach außen orientierten Kragen (14) fortsetzt, welcher in axialer Projektion einen Teil des Anschlussstücks (5) stirnseitig überdeckt.

10. Schlauch nach Anspruch 9,
**dadurch gekennzeichnet,**
**dass** der Kragen (14) der Innenhülse (6) und der Anschlussflansch (8) strinseitig eine gemeinsame radiale Ebene bilden.

11. Anschlussvorrichtung zum Anschließen eines Schlauchs, bestehend aus einem Innenschlauch (2) aus elastomerem Material, einem den Innenschlauch (2) umgebenden, helixförmig gewickelten Metallschlauch (1) und einer den Metallschlauch umgebenden Ummantelung (7) aus Kunststoff, an eine Armatur oder dergleichen, wobei die Anschlussvorrichtung eine Innenhülse (6) zum Einsetzen in den Innenschlauch (2) sowie eine Außenhülse (3) zum Aufsetzen auf den Metallschlauch (1) und seine Ummantelung (7) umfasst,
**dadurch gekennzeichnet,**
**dass** die Anschlussvorrichtung außerdem ein Anschlussstück (5) zum Einsetzen zwischen den Innenschlauch (2) und den Metallschlauch (1) aufweist, das sich stirnseitig in einen Anschlussflansch (8) fortsetzt.
